# EUROPEAN PATENT SPECIFICATION

(11) **EP 0 465 055 B1**
(45) Date of publication and mention of the grant of the patent: **16.04.1997**
(21) Application number: 91305593.5
(22) Date of filing: 20.06.1991
(51) Int. Cl.: C01F 7/14, C01F 7/06, C01F 7/47

(54) **Crystal growth modification**
Modifikation der Kristallzüchtung
Modification de la croissance de cristaux

(30) Priority: 25.06.1990 AU 797/90
(43) Date of publication of application: 08.01.1992
(73) Proprietor: NALCO AUSTRALIA PTY. LIMITED, Botany New South Wales 2019 (AU)
(72) Inventor: Farquharson, Graeme John, Carlton, New South Wales, 2218 (AU)
(74) Representative: Newstead, Michael John

(56) References cited:
- EP-A- 0 367 437
- EP-A- 0 392 779
- CA-A- 825 234
- DE-A- 2 158 130
- US-A- 2 280 998
- US-A- 3 085 853
- US-A- 4 608 237
- Chemical Abstracts AN 110: 41332
- Ullmann's Encyclopedia of Industrial Chemistry, 5th edition, volume A1, p574-577
- ASTM standard E20-85

## Description

This invention relates to refining aluminous ore for the recovery of alumina (i.e. aluminium hydroxide) in the Bayer Process.

In the Bayer Process for Bauxite ore beneficiation, Bauxite is digested in a caustic solution and, after separation from red mud and other insoluble impurities, solubilized alumina is precipitated as the trihydrate.

The precipitation is conducted progressively in a series of tanks. Seed crystals are added to the initial hot caustic solution pregnant with alumina which is slowly allowed to cool causing crystal growth. The crystals are then separated from the remaining liquor in a series of classifiers, larger crystals being removed with underflow from the first stage classifier and being recovered by filtration.

Smaller crystals pass with the overflow to second and subsequent stage classifiers. Underflow from these classifiers is generally returned to the process as seed.

In conduct of the Bayer process care is taken to avoid premature crystallization upstream of the precipitation step and optimize the precipitation step to maximise the yield from the caustic liquors while maintaining a desired crystal size distribution. It is desirable to produce a relatively large crystal size since that facilitates separation and subsequent processing steps. A proportion of small crystals is also required to seed the precipitation process. However, excessive production of seed crystals is undesirable as the material must be recycled. Crystal size distribution is controlled during the precipitation stage by careful control of the temperature profile, seed charge, seed crystal surface area, liquor loading, degree of agitation, and the like. The crystallization is also influenced by organic impurities in the Bayer process liquors such as oxalates which tend to adversely affect the process.

US-A-4 608 237 describes the addition of a high molecular weight latex polymer as a crystal growth modifier to the Bayer process liquors immediately prior to the precipitation step. This agent is believed to alter the nature of sodium oxalate crystals formed during crystallization of the alumina trihydrate and so affect crystal growth of the alumina.

It has also been proposed to add a surfactant dissolved in an oil carrier to the hot Bayer green liquor undergoing precipitation in order to increase the coarseness of crystalline aluminium trihydrate yielded. Care must be taken when using these crystal growth modifiers as in some cases addition rates are critical and a slight excess can poison crystal growth.

Whilst the above described crystal growth modifiers have been of commercial value they are nevertheless costly in use.

The present invention is based on the finding that crystal development is controllable by an agent comprising a polysaccharide or a polysaccharide graft copolymer. As explained in Ullmann's Encyclopedia of Industrial Chemistry, VCH-Verlag, 5th Ed., Vol. A1, pages 574-577, crystal development involves nucleation, growth and, particularly when supersaturation is high, agglomeration. These are all phases of crystal development and are totally unrelated to the phenomenon of flocculation which, as explained in ASTM E 20-85, relates to the mutual holding of particles together by weak physical forces such as surface tension and adsorption. CA-A-825 234 discloses the use of dextran as a flocculant to bridge individual particles holding them in loose association and US-A-2 280 998 discloses the flocculation of red mud using starch, all of which is in contrast to crystal development which, as stated above, involves nucleation, growth and agglomeration, the latter not being flocculation (see ASTM E 20-85).

According to the present invention from one aspect, there is provided a process for refining aluminous ore for the recovery of alumina which includes the steps of:
(a) digesting the ore in a caustic liquor to extract alumina values;
(b) subsequently clarifying the liquor to remove caustic insoluble materials;
(c) precipitating alumina crystals from the clarified liquor; and
(d) adding to the liquor after the clarification step and prior to the precipitation step an effective amount of a polysaccharide or polysaccharide graft copolymer for agglomeration and/or crystal growth promotion, the effective amount of the polysaccharide or polysaccharide graft copolymer being from about 0.1 ppm to about 100 ppm, based on the total weight of the caustic liquor. Preferably the effective amount is from about 0.1 ppm to about 50 ppm and more preferably from about 0.1 ppm to about 25 ppm.

According to the present invention from another aspect, there is provided a process for refining aluminous ore for the recovery of alumina which includes the steps of:
(a) digesting the ore in a caustic liquor to extract alumina values;
(b) subsequently clarifying the liquor to remove caustic insoluble materials;
(c) precipitating alumina crystals from the clarified liquor;
(d) adding to the liquor upstream of the precipitation step an effective amount of a polysaccharide or polysaccharide graft copolymer as an agent for stabilisation of alumina against precipitation at a first concentration and for agglomeration and/or crystal growth promotion at a lower concentration;
(e) controlling the concentration of the agent at or above the first concentration prior to the precipitation step; and
(f) reducing the concentration of the agent to the lower concentration immediately prior to the precipitation step, the lower concentration being from about 0.1 ppm to about 50 ppm, based on the total weight of the caustic liquor.

The agent is added to the liquor at a first concentration which inhibits crystallization, preferably from about 50 ppm to about 300 ppm, based on the total weight of the caustic liquor.

The concentration of the agent is reduced prior to precipitation to a lower concentration at which it promotes crystal growth, preferably from about 0.1 ppm to about 25 ppm, based on the total weight of the caustic liquor.

Preferably, the polysaccharide or polysaccharide graft copolymer has an average molecular weight of from about 75,000 to about 5,000,000. Such a polysaccharide is preferably selected from the group comprising dextrans having an average molecular weight of from about 75,000 to about 5,000,000, nonionic starch, anionic starch, caragenan, potato starch, wheatstarch, Wades maize cornflour and waxy maize starch whilst such a polysaccharide graft copolymer preferably is selected from the group comprising dextran -(g)- poly-acrylate and dextran -(g)- polyacrylamide.

Preferred embodiments of the invention will now be more particularly described by way of example only, with reference to the accompanying drawings wherein mean % size increase from control is shown on the y axis and Malvern sizing data (in microns) is shown on the x axis.
Figure 1 shows the performance of a dextran of average molecular weight 500,000 (Accurate Chemical & Scientific), potato starch (Labchem), wheatstarch (Goodman Fielder Wattie), Wades maize cornflour (Goodman Fielder Wattie), and Mazaca 6401x (Goodman Fielder Wattie) each at doses of 5 ppm.
Figure 2 shows the performance of the polysaccharides of Figure 1 at a dose rate of 10 ppm, and
Figure 3 shows the performance of the polysaccharides of Figure 1 at a dose rate of 25 ppm.

By way of further explanation, the following examples are provided.

### Experimental Procedure for Examples 1 to 3

Seed crystals were obtained from an alumina plant as Tertiary Tray Seed ("TTS") slurry.

The TTS slurry was filtered through fine paper without any additional washing. This procedure was considered most likely to maintain the integrity of the seed, particularly with respect to surface organics. The well shaken moist seed is also less prone to give sizing segregation. SPO (determined by titration) for the moist TTS seed was 0.018%.

A portion of the retained moist seed was oven-dried to determine % solids which was 89.9% for the samples of examples 1 to 3.

Crystal growth modifiers to be tested were weighed to the centre of inverted bottle lids.

Bottles were charged with a weighed quantity of liquor pregnant with alumina and freshly taken from the precipitator inlet line of a refinery ("LTP liquor"). The seed was added in one portion from a folded paper. The crystal growth modifier was then added as the lid was inverted and the bottle tightly sealed with its lid. Generally, three bottles were charged at a time then immediately added to a water bath and maintained at 76°C for three hours simulating first tank agglomeration conditions. The bottles were then removed from the bath in the same sequence and immediately quenched with 15 - 20 ml 200 g/l sodium gluconate solution to prevent flash nucleation or any further growth.

Aluminium trihydrate was filtered off and washed thoroughly with hot de-ionized water, then dried at 105°C.

Crystal sizing was determined by means of a Malvern apparatus well known in the art.

Duplicate samples from each bottle containing crystal growth modifier were compared with triplicate control samples to which no crystal growth modifier was added.

### EXAMPLE 1

Products tested were:
- GJF812: a product of the surfactant/oil type;
- GJF544: a dextran of average molecular weight 500,000 from Accurate Chemical & Scientific, N.Y.;
- GJF582: a dextran of average molecular weight approximately 4 million from pharmachem.

Experimental details and yield data are given in Table 1A. Malvern sizing data is given in Table 1B. The data for the % + 75 micron are shown in Table 1C.

### LIQUOR ANALYSIS

LTP Caustic = 195.3 g/l, Alumina/Caustic = 0.698.
LTP oxalate (HPLC) = 1.61 g/l.
LTP charge = 248.2 g, TTS seed charge = 7.80 g (35 g/l).

The data of Table 1C shows the precipitation behaviour of alumina in the presence of dextran is both dose and molecular weight dependent. The higher molecular weight GJF582 dextran sent the crystal product fine at all doses. Surprisingly, the GJF544 is a powerful crystal growth modifier at 10 ppm but is less effective at 20 ppm owing to the onset of poisoning, which is complete at 50 ppm. That is to say, at 50 ppm GJF544 acts as an agent to stabilize the alumina against crystallization. Alumina recovery data (Table 1A) show the GJF582 product does not significantly affect yield at 50 ppm while the lower molecular weight product at the same dose gave less alumina than the original seed charge.

### EXAMPLE 2

Products tested were:
- GJF544: See Example 1;
- GJF609: A dextran of average molecular weight 500,000 from Dextran Products of Canada;
- GJF852: A dextran of average molecular weight 500,000 from BTK;
- GJF851: A dextran of average molecular weight approximately 2 million from BTK;
- GJF652: A dextran of average molecular weight approximately 5 million from BTK;
- GJF854: A dextran of average molecular weight 250,000 from KODAK;
- GJF855: A dextran of average molecular weight 75,000 from KODAK.

Experimental details and yield data are given in Table 2A. Malvern sizing data are recorded in Table 2B. The data for the % + 75 micron fraction are further shown in Table 2C.

### LIQUOR ANALYSIS

LTP Caustic = 196.3 g/l, Alumina/Caustic = 0.698.
LTP oxalate (HPLC) = 1.57 g/l.
LTP charge = 248.2 gm, TTS seed charge = 7.80 gm (35 g/l).

The data of Table 2C shows that the dextrans of average molecular weight 500,000 (GJF544, GJF609 and GJF852) were powerful agglomeration aids in these tests. Alumina recovery data (Table 2A) show some yield suppression by the GJF544 at 25 ppm. The higher average molecular weight products GJF851 and GJF652 were less effective or sent the alumina fine without yield suppression. Dextrans of average molecular weight 75,000 - 250,000 were powerful agglomeration aids with significant yield suppression at 25 ppm.

### EXAMPLE 3

The large coarsening found for the lower average molecular weight dextrans at 10 - 25 ppm suggests that doses of this order would quickly deprive a refinery of seed. Lower doses would allow the refinery to more easily generate sufficient seed by stressing the plant (lower fill temperatures, etc.) as well as improving the economics. In this example therefore the lower average molecular weight dextrans are compared at dose rates of 0.5, 1 and 5 ppm.

Products tested were:
- GJF544: See Example 2;
- GJF854: See Example 2;
- GJF855: See Example 2;
- GJF646: A graft copolymer of dextran (average molecular weight 500,000) and acrylamide. Dosed at 25 ppm on an actives (≃10%) basis;
- GJF856: Potato starch ex-Labchem (Ajax).

Experimental details and yield data are given in Table 3A. Malvern sizing data are recorded in Table 3B. The data for the % + 75 micron fraction are further shown in Table 3C.

### LIQUOR ANALYSIS

LTP Caustic = 194.3 g/l, Alumina/Caustic = 0.696.
LTP oxalate (HPLC) = 1.58 g/l.
LTP charge = 248.2 gm, TTS seed charge = 7.80 gm (35 g/l).

The data of Table 3C show that dextran of average molecular weight 500,000 is an effective agglomeration aid at a dose rate of 0.5 ppm. Lower molecular weight dextrans are less effective. The dextran-acrylamide graft copolymer GJF646 and the starch GJF856 are powerful agglomeration aids. The latter result is particularly surprising and is significant due to the low cost of the raw material.

Polysaccharides appear to exhibit complex behaviour as agglomeration aids, with results ranging from strong coarsening to strong poisoning of precipitation depending on average molecular weight, dose rate and structure.

### EXPERIMENTAL PROCEDURE FOR EXAMPLE 4

Seed crystals were obtained from an alumina plant as TTS slurry and the TTS slurry filtered without washing under vacuum.

A portion of the retained moist seed was oven-dried to determine % solids which was about 90% solids seed for the samples of example 4.

Crystal growth modifiers to be tested were weighed to the centre of inverted bottle lids in order to be made up as 1% solutions in 17g/l caustic except where noted otherwise .

250 ml Nalgene bottles containing the crystal growth modifier were each charged with 200 ml of LTP Liquor and the bottles tightly sealed with their lids. Each bottle was subsequently equilibrated at 76°C then charged with 7.80 gm moist seed (35g/L).

Bottles were then returned to the water bath and maintained at 76°C for three hours simulating first tank agglomeration conditions after which bottles were removed and immediately quenched as in examples 1-3.

Aluminium trihydrate was filtered off and washed thoroughly with hot de-ionized water, then dried at 105°C.

Crystal sizing was determined by means of a Malvern apparatus well known in the art.

Duplicate samples from each bottle containing crystal growth modifier were compared with triplicate control samples to which no crystal growth modifier was added.

### EXAMPLE 4

In this example, the effect on agglomeration of a high molecular weight dextran, together with a range of polysaccharides and other reagents was evaluated.

Products tested were:
- GJF152: - BTK Dextran average molecular weight of 5 million
- Hamaco 267: - Nonionic starch (Staley)
- Sta-Lok 600: - Anionic Starch (Staley)
- Glactacol 411D: - Nonionic guar (Henkel)
- Kelzan S: - Xanthan
- Kelgin HV: - Algin (Kelco)
- Glactacol 817: - Cationic guar (Henkel)
- Glactacol 640: - Anionic guar (Henkel)
- Staramic 747: - Oxidised anionic starch (Staley)
- Klucol HF: - Hydroxypropylcellulose (Hercules)
- Kappa RE9091: - Caragenan (FMC)
- Aquaret: - Carboxymethylated starch (Raisio)
- Kelcoloid HVF: - Propylene glycol alginate (Kelco)

Experimental details and yield data are given in Table 4A. Malvern sizing data are recorded in Table 4B. The data for the %+75 micron fraction are further shown in Table 4C.

### LIQUOR ANALYSIS:

LTP Caustic = 190.7 g/L, Alumina/caustic = 0.696

The data of Table 4C show that the crystal growth modification behaviour of the high molecular weight dextran was similar to that of the dextran of average molecular weight 500,000 as shown in examples 1 to 3, that is the high molecular weight dextran exhibited coarsening at low doses but is less effective at higher doses owing to the onset of poisoning.

The anionic starch Sta-Lok 600 gave good coarsening whilst the Caragenan Kappa RE9091 strongly sent the product fine, though with no loss of yield. Without being bound by theory, it is thought that product increases nucleation. Other polysaccharides tested had little or no effect.

### EXPERIMENTAL PROCEDURE FOR EXAMPLES 5 AND 6

The general method used was as described for examples 1 to 3. Duplicate samples from each bottle containing crystal growth modifier were compared with triplicate control samples to which no crystal growth modifier was added except where noted. All tests were at 76°c for 3 hr simulating first tank agglomeration conditions.

SPO (determined by HPLC) for the moist TTS seed was 0.015%. A portion of the retained moist seed was oven-dried to determine % solids which was 91.58% for the samples discussed below. The +45 fraction was 45.3%.

All products were made-up as 0.2% solutions in 17 g/l caustic.

In this example, further polysaccharides are evaluated.

### EXAMPLE 5

Products tested were:
- GJF544: - dextran of average molecular weight (Accurate Chemical & Scientific)
- GJF856: - potato starch (Labchem)
- GJF891: - wheatstarch (Goodman Fielder Wattie)
- GJF892: - Wades maize cornflour (Goodman Fielder Wattie)
- GJF893: - Mazaca 3401x (Goodman Fielder Wattie)

Expermental details and yield data are given in Table 5A. Malvern sizing data are recorded in Table 5B. The data for the %+75 micron fraction are further shown in Table 5C.

### LIQUOR ANALYSIS

LTP = 190.0 g/l, Alumina/Caustic = 0.696.
LTP oxalate (HPLC) = 1.75 g/l.
LTP charge = 248.3 g, TTS seed charge = 7.64 g (35 g/l).

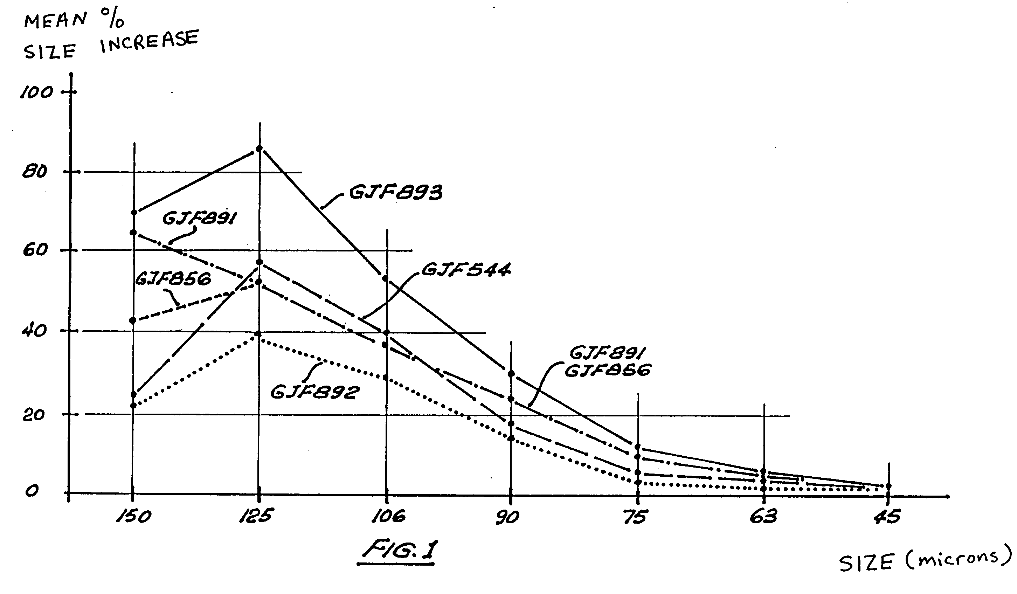

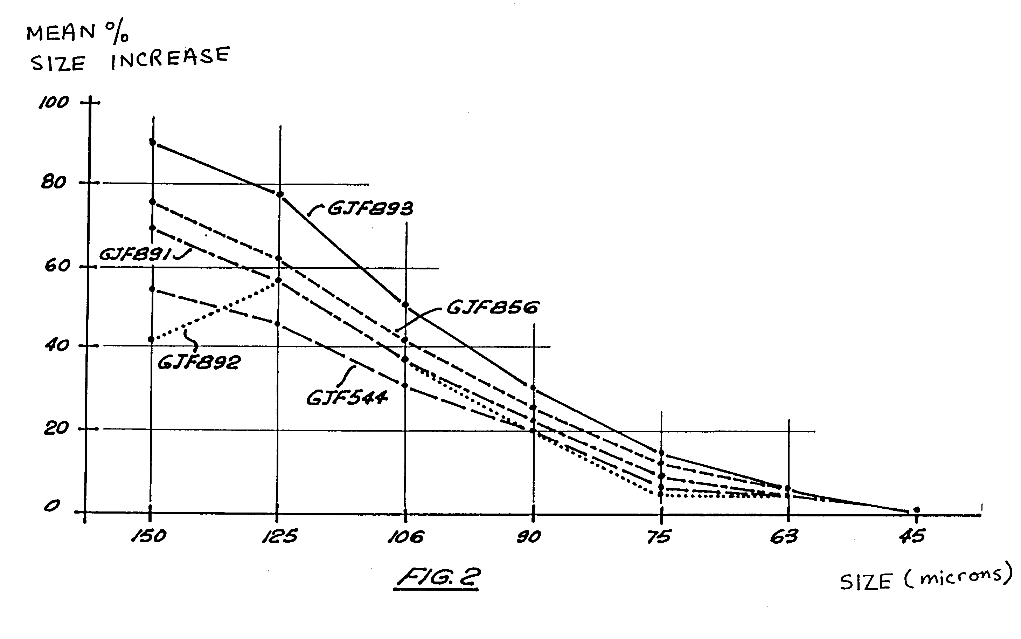

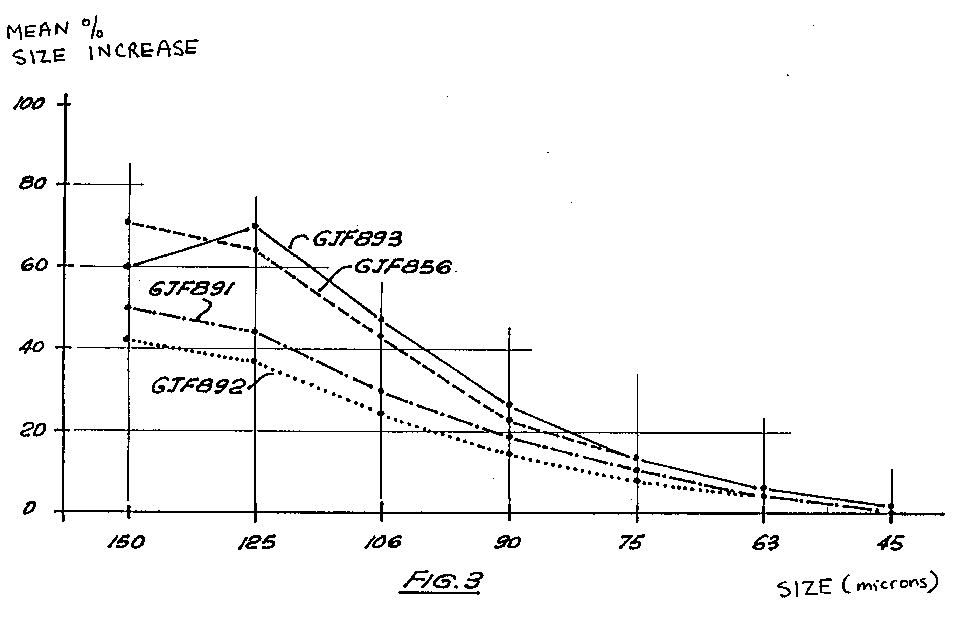

The data of table 5C show all starch products were highly effective agglomeration aids at low doses (5 ppm). Average percentage size increases from the control vs Malvern sieve size are plotted in Figures 1 to 3. The graphs show GJF893 gives superior performance at each dose rate. Dextran was an effective agglomeration aid at low doses but is less effective at 25 ppm owing to the onset of poisoning.

### EXAMPLE 6

Products tested were:
- GJF812: - See Example 1
- GJF853: - xanthan gum made-up as a 0.2% solution in water.
- GJF890: - Carboxymethylcellulose sodium salt made-up as 0.2% solution in water.
- GJF661: - Dextran-AcAm graft copolymer prepared from dextran of av mol wt 500,000 (7.5 g, Accurate Chemical & Scientific - aka GJF544) and AcAm (33 g) in water (537 g), diluted to 1% organic solids in water (three doses without duplicate tests).
- GJF662: - Dextran-AcAm graft copolymer prepared from dextran of av mol wt 250,000 (7.5 g, BDH) and AcAm (33 g) in water (537 g), diluted to 1% organic solids in water (three doses without duplicate tests).
- GJF544: - dextran made-up at 0.2% in water.
- GJF871: - a product of the surfactant/oil type.

Experimental details and yield data are given in Table 6A. Malvern sizing data are recorded in Table 6B. The data for the %+75 micron fraction are further shown in table 6C.

### LIQUOR ANALYSIS:

LTP Caustic = 194.6 g/l, Alumina/Caustic = 0.699.
LTP oxalate (HPLC) = 1.72 g/l.
LTP charge = 248.3 g, TTS seed charge = 7.64 g (35 g/l).

The data of table 6C show that xanthan gum sent the product a little fine at 20 ppm while the carboxymethylcellulose at the same dose had no significant crystal growth modifying effect. This contrasts with the powerful crystal growth modifying effects observed with dextrans and starches and shows that polysaccharide structure as well average molecular weight are important. The dextran-AcAm grafts were effective agglomeration aids with the product derived from the higher average molecular weight dextran (GJF661) being the better product especially at the lowest dose rate. The dextran GJF544 at 20 ppm gave good coarsening with some loss of yield. The same product was less effective at 25 ppm due to the onset of poisoning as in the earlier examples. The grafts showed no evidence of poisoning up to 50 ppm.

### EXAMPLE 7

The surprising discovery that some of the agents exemplified are very effective agglomeration aids at low concentrations but are also very effective to stabilize alumina against crystallization at higher concentrations enables a novel modification of the Bayer process to be conducted.

The agents can be added to the caustic liquor before, during or after digestion clarification or washing and prior to crystallization, preferably during digestion. The agents are added at a sufficiently high concentration to stabilize the alumina against crystallization, preferably, in an amount of from about 50 ppm to about 300 ppm, based on the total weight of the caustic liquor. This prevents undesirable crystallization occurring before the crystallization step and in favourable cases may allow the alumina/caustic concentration to be improved withconsequent throughput improvement for a given plant.

Immediately prior to the crystallization step the concentration of the agent is reduced to a concentration level at which it functions not as a stabilizer but as a crystal growth promoter, for example at from about 0.1 ppm to about 50 ppm based on the total weight of the caustic liquor. That level is achieved for example, by flocculation with a filter aid or red mud or bauxite.

In this example the effect of higher doses of polysaccharide on the stabilization of alumina against crystallisation is evaluated. GJF544 (300 ppm) was added to LTP liquor (200 ml) with a synthetic seed (7.0 g, 35 g/l). After 3hr at 76°C the batch was quenched with sodium gluconate solution. The precipitated trihydrate was filtered off, washed with hot DI water, then dried at 105°C. The average recovery was 1.41 gm, compared to an average recovery of 26.03 gm for untreated control batches.

Suitable polysaccharide copolymers for use in the present invention may be made according to the method disclosed in J. Macromol Sci Chem A16(8) PP1441 - 1462 and may include as the graft copolymer monomers including, but not limited to acrylamide, methacrylamide, acrylic acid, methacrylic acid, acrylamidomethyl propane sulphonic acid, vinyl chloride, styrene, 2-sulphoethylacrylate and styrene sulphonate and their alkali metal and ammonium salts, 2-aminoethylmethacrylate hydrochloride, N,N-dimethyl diallylammonium chloride and the like.

Preferred monomers or co-monomers include acrylamide, and the alkali metal and ammonium salts of acrylic acid,and acrylamido methylpropane sulfonic acid. Other polysaccharides which may be used; subject to testing for effectiveness with a given bauxite include cellulose derivatives such as carboxymethyl or carboxymethyl cellulose, guar, xanthans and starches derived from sago, banana, arrowroot, tapioca, rice, maize, wheat or the like.

As will be apparent to those of ordinary skill in the art from the teaching hereof, the invention may be embodied in other forms without departing from the scope of the inventive concept disclosed.

**TABLE 1A**

| Product | Dose (ppm) | Recovery (g) |
|---|---|---|
| control a | - | 14.97 |
| control b | - | 14.95 |
| control c | - | 14.76 |
| GJF812 a | 100 | 14.80 |
| GJF812 b | 100 | 14.81 |
| GJF812 a | 50 | 14.77 |
| GJF812 b | 50 | 14.70 |
| GJF544 a | 5 | 14.65 |
| GJF544 b | 5 | 14.45 |
| GJF544 a | 10 | 14.09 |
| GJF544 b | 10 | 14.03 |
| GJF544 a | 20 | 14.37 |
| GJF544 b | 20 | 14.41 |
| GJF544 | 50 | 7.13 |
| GJF544 a | 100 | 7.09 |
| GJF544 b | 100 | 7.09 |
| GJF582 a | 5 | 14.77 |
| GJF582 b | 5 | 14.81 |
| GJF582 a | 10 | 14.90 |
| GJF582 b | 10 | 14.76 |
| GJF582 | 20 | 14.91 |
| GJF582 a | 50 | 14.50 |
| GJF582 b | 50 | 14.46 |
| GJF582 a | 100 | 10.98 |
| GJF582 b | 100 | 10.75 |

**TABLE 1B**

| Product | %-150 | %-125 | %-106 | %-90 | %-75 | %-63 | %-45 |
|---|---|---|---|---|---|---|---|
| control a | 92.2 | 82.8 | 68.4 | 49.6 | 30.3 | 17.5 | 7.2 |
| control b | 92.5 | 83.6 | 69.0 | 49.5 | 29.2 | 16.3 | 7.4 |
| control c | 91.5 | 82.3 | 67.8 | 48.7 | 28.9 | 16.1 | 6.9 |
| B4.1 Dose rate = 100 ppm | | | | | | | |
| GJF812 a | 90.8 | 80.4 | 64.8 | 44.9 | 25.4 | 13.7 | 6.4 |
| GJF812 b | 91.1 | 80.4 | 64.9 | 45.6 | 26.4 | 14.4 | 6.4 |
| GJF582 a | 98.1 | 95.1 | 90.0 | 81.5 | 64.8 | 44.6 | 15.9 |
| GJF582 b | 98.2 | 95.6 | 89.9 | 79.8 | 61.5 | 41.3 | 15.0 |
| B4.2 Dose rate = 50 ppm | | | | | | | |
| GJF812 a | 92.8 | 83.0 | 68.0 | 48.5 | 28.7 | 15.8 | 6.5 |
| GJF812 b | 92.4 | 83.2 | 68.4 | 48.9 | 28.5 | 15.4 | 6.8 |
| GJF544 | 99.3 | 98.3 | 97.3 | 94.4 | 88.5 | 80.9 | 62.8 |
| GJF582 a | 96.5 | 91.0 | 82.1 | 68.5 | 47.6 | 28.2 | 11.0 |
| GJF582 b | 96.2 | 90.4 | 80.6 | 66.0 | 45.2 | 26.8 | 10.7 |
| B4:3 Dose rate = 20 ppm | | | | | | | |
| GJF544 a | 89.3 | 76.5 | 59.8 | 40.6 | 22.8 | 12.5 | 6.1 |
| GJF544 b | 89.7 | 78.6 | 63.0 | 44.0 | 25.0 | 13.2 | 6.1 |
| GJF582 | 95.4 | 89.5 | 79.5 | 64.5 | 43.4 | 25.4 | 11.1 |
| B4.4 Dose rate = 10 ppm | | | | | | | |
| GJF544 a | 85.7 | 70.0 | 51.4 | 32.3 | 17.0 | 9.5 | 4.1 |
| GJF544 b | 87.5 | 74.4 | 56.7 | 36.3 | 19.1 | 10.4 | 4.7 |
| GJF582 a | 96.0 | 90.7 | 81.4 | 67.1 | 46.5 | 28.3 | 11.7 |
| GJF582 b | 93.8 | 86.5 | 74.7 | 57.9 | 36.9 | 20.6 | 9.0 |
| B4.5 Dose rate = 5 ppm | | | | | | | |
| GJF544 a | 92.8 | 83.0 | 68.0 | 48.5 | 28.7 | 15.8 | 6.5 |
| GJF544 b | 92.4 | 83.2 | 68.4 | 48.9 | 28.5 | 15.4 | 6.8 |
| GJF582 a | 93.7 | 86.3 | 74.1 | 56.9 | 35.9 | 20.3 | 9.0 |
| GJF582 b | 94.1 | 86.1 | 74.0 | 57.7 | 37.1 | 20.9 | 9.2 |

**TABLE 1C**

| Dose | av %+75 micron at dose (ppm) | | | | % increase of av %+75 from control | | |
|---|---|---|---|---|---|---|---|
| | control | 812 | 544 | 582 | 812 | 544 | 582 |
| 0 | 70.5 | | | | | | |
| 5 | | | 71.4 | 63.5 | | 1.3 | -9.9 |
| 10 | | | 82.0 | 58.3 | | 16.3 | -17.3 |
| 20 | | | 76.1 | 56.6 | | 7.9 | -19.7 |
| 50 | | 71.4 | 11.5 | 54.6 | 1.3 | -80 | -22.6 |
| 100 | | 74.1 | - | 36.9 | 5.1 | | -47.6 |

**TABLE 2A**

| Product | Dose (ppm) | Recovery (g) |
|---|---|---|
| control a | - | 14.80 |
| control b | - | 14.78 |
| control c | - | 14.79 |
| GJF544 a | 10 | 14.51 |
| GJF544 b | 10 | 14.63 |
| GJF544 a | 25 | 13.11 |
| GJF544 b | 25 | 13.18 |
| GJF609 a | 10 | 14.57 |
| GJF609 b | 10 | 14.48 |
| GJF609 a | 25 | 13.95 |
| GJF609 b | 25 | 14.29 |
| GJF852 a | 10 | 14.41 |
| GJF852 b | 10 | 14.33 |
| GJF852 a | 25 | 14.36 |
| GJF852 b | 25 | 14.24 |
| GJF851 a | 10 | 14.33 |
| GJF851 b | 10 | 14.49 |
| GJF851 a | 25 | 14.50 |
| GJF851 b | 25 | 14.42 |
| GJF652 a | 10 | 14.64 |
| GJF652 b | 10 | 14.56 |
| GJF652 a | 25 | 14.67 |
| GJF652 b | 25 | 14.60 |
| GJF854 a | 10 | 14.42 |
| GJF854 b | 10 | 14.59 |
| GJF854 a | 25 | 13.30 |
| GJF854 b | 25 | 12.86 |
| GJF855 | 10 | 14.05 |
| GJF855 a | 25 | 11.34 |
| GJF855 b | 25 | 11.72 |

**TABLE 2B**

| Product | %-150 | %-125 | %-106 | %-90 | %-75 | %-63 | %-45 |
|---|---|---|---|---|---|---|---|
| control a | 92.1 | 83.4 | 70.0 | 52.2 | 32.2 | 18.0 | 7.5 |
| control b | 91.3 | 82.1 | 68.8 | 51.5 | 31.5 | 17.1 | 7.2 |
| control c | 91.9 | 83.4 | 70.3 | 52.7 | 32.3 | 17.6 | 7.5 |
| B5.1 Dose rate = 10 ppm | | | | | | | |
| GJF544 a | 88.8 | 75.7 | 58.5 | 39.0 | 21.9 | 12.3 | 4.9 |
| GJF544 b | 90.0 | 79.2 | 64.1 | 45.6 | 26.2 | 13.6 | 5.8 |
| | 90.5 | 79.3 | 64.3 | 46.1 | 27.0 | 14.2 | 5.6 |
| GJF609 a | 87.5 | 74.5 | 58.0 | 39.1 | 21.8 | 11.9 | 5.6 |
| GJF609 b | 87.4 | 74.1 | 57.1 | 38.0 | 20.8 | 11.2 | 5.2 |
| GJF852 a | 87.9 | 74.8 | 58.2 | 39.8 | 22.9 | 12.7 | 5.2 |
| GJF852 b | 90.3 | 78.0 | 62.1 | 43.8 | 25.7 | 14.1 | 6.0 |
| GJF851 a | 91.1 | 81.2 | 67.0 | 49.0 | 29.6 | 16.4 | 7.2 |
| GJF851 b | 91.8 | 82.4 | 68.2 | 49.8 | 30.2 | 16.9 | 7.5 |
| GJF652 a | 92.6 | 84.4 | 71.4 | 53.6 | 32.8 | 17.8 | 8.1 |
| GJF652 b | 92.5 | 83.2 | 68.9 | 50.3 | 30.5 | 17.0 | 7.3 |
| GJF854 a | 88.8 | 76.5 | 60.4 | 41.8 | 23.8 | 12.6 | 5.4 |
| GJF854 b | 90.6 | 80.0 | 65.1 | 46.6 | 27.3 | 14.5 | 5.7 |
| GJF855 | 89.5 | 78.2 | 62.0 | 42.1 | 23.3 | 12.2 | 4.9 |
| B5.2 Dose rate = 25 ppm | | | | | | | |
| GJF544 a | 86.5 | 71.1 | 53.9 | 35.0 | 19.1 | 10.5 | 4.1 |
| GJF544 b | 85.5 | 69.2 | 51.1 | 33.2 | 18.2 | 10.0 | 4.0 |
| GJF609 a | 89.5 | 78.2 | 62.9 | 44.5 | 25.3 | 13.0 | 5.9 |
| GJF609 b | 90.2 | 78.6 | 62.4 | 42.8 | 24.1 | 13.0 | 5.8 |
| GJF852 a | 89.2 | 77.7 | 62.8 | 45.1 | 26.1 | 13.4 | 6.4 |
| GJF852 b | 90.6 | 79.9 | 64.3 | 44.8 | 25.9 | 14.3 | 6.1 |
| GJF851 a | 92.5 | 83.2 | 69.5 | 51.7 | 31.5 | 17.2 | 7.4 |
| GJF851 b | 90.8 | 80.5 | 66.1 | 47.9 | 28.0 | 14.7 | 7.0 |
| GJF652 a | 93.4 | 86.0 | 74.6 | 58.8 | 38.0 | 21.3 | 9.2 |
| GJF652 b | 93.0 | 85.0 | 72.4 | 55.1 | 34.1 | 18.5 | 8.1 |
| GJF854 a | 82.1 | 65.5 | 47.2 | 29.3 | 15.4 | 8.7 | 3.6 |
| GJF854 b | 83.3 | 63.1 | 44.6 | 29.8 | 17.2 | 9.1 | 3.4 |
| GJF855 a | 90.6 | 78.8 | 62.8 | 44.0 | 25.6 | 13.8 | 5.1 |
| GJF855 b | 89.0 | 76.1 | 59.7 | 41.0 | 23.3 | 12.3 | 4.9 |

**TABLE 2C**

| Product | av %+75 micron at dose (ppm) | | | % increase of av %+75 from control | | |
|---|---|---|---|---|---|---|
| | 0 | 10 | 25 | 0 | 10 | 25 |
| control | 68.0 | | | | | |
| GJF544 | | 75.8 | 81.4 | | 11.5 | 19.7 |
| GJF609 | | 78.7 | 75.3 | | 15.7 | 10.7 |
| GJF852 | | 75.7 | 74.0 | | 11.3 | 8.8 |
| GJF851 | | 70.1 | 70.3 | | 3.1 | 3.4 |
| GJF652 | | 68.4 | 64.0 | | 0.6 | -5.9 |
| GJF854 | | 74.5 | 83.7 | | 9.6 | 23.1 |
| GJF855 | | 76.7 | 75.6 | | 12.8 | 11.2 |

**TABLE 3A**

| Product | Dose (ppm) | Recovery (g) |
|---|---|---|
| control a | - | 14.96 |
| control b | - | 14.96 |
| control c | - | 14.86 |
| GJF544 a | 0.5 | 14.94 |
| GJF544 b | 0.5 | 14.85 |
| GJF544 | 1 | 14.90 |
| GJF544 a | 5 | 14.67 |
| GJF544 b | 5 | 14.71 |
| GJF854 a | 0.5 | 14.73 |
| GJF854 b | 0.5 | 14.84 |
| GJF854 | 1 | 14.68 |
| GJF854 a | 5 | 14.58 |
| GJF854 b | 5 | 14.69 |
| GJF855 a | 0.5 | 14.93 |
| GJF855 b | 0.5 | 14.78 |
| GJF855 a | 1 | 14.84 |
| GJF855 b | 1 | 14.81 |
| GJF855 a | 5 | 14.70 |
| GJF855 b | 5 | 14.68 |
| GJF646 a | 25 | 14.58 |
| GJF646 b | 25 | 14.71 |
| GJF856 a | 25 | 14.57 |
| GJF856 b | 25 | 14.68 |

**TABLE 3B**

| Product | %-150 | %-125 | %-106 | %-90 | %-75 | %-63 | %-45 |
|---|---|---|---|---|---|---|---|
| control a | 93.7 | 85.6 | 72.7 | 55.1 | 34.5 | 19.2 | 7.8 |
| | 92.1 | 83.0 | 70.2 | 53.7 | 33.6 | 18.1 | 6.9 |
| control b | 92.0 | 83.0 | 69.3 | 51.3 | 31.4 | 17.2 | 6.8 |
| control c | 93.3 | 84.6 | 71.1 | 53.1 | 32.5 | 17.6 | 7.0 |
| B6.1 Dose rate = 0.5 ppm | | | | | | | |
| GJF544 a | 90.3 | 79.2 | 64.5 | 46.7 | 27.6 | 14.4 | 6.0 |
| GJF544 b | 90.1 | 79.0 | 64.3 | 46.6 | 28.0 | 15.1 | 6.0 |
| GJF854 a | 92.2 | 82.8 | 69.6 | 52.9 | 33.4 | 18.4 | 6.5 |
| GJF854 b | 91.8 | 83.8 | 70.8 | 52.9 | 32.6 | 18.1 | 7.3 |
| GJF855 a | 92.1 | 83.1 | 70.5 | 54.2 | 34.0 | 18.2 | 7.1 |
| GJF855 b | 91.9 | 82.5 | 68.7 | 50.8 | 31.5 | 17.5 | 6.5 |
| B6.2 Dose rate = 1 ppm | | | | | | | |
| GJF544 | 90.0 | 78.5 | 62.6 | 43.7 | 25.9 | 14.7 | 5.6 |
| GJF854 | 91.3 | 81.0 | 66.4 | 48.1 | 28.8 | 15.6 | 5.8 |
| GJF855 a | 92.0 | 82.9 | 69.0 | 50.8 | 31.2 | 17.5 | 6.9 |
| GJF855 b | 92.9 | 84.1 | 71.1 | 54.2 | 34.7 | 19.6 | 6.6 |
| B6.3 Dose rate = 5 ppm | | | | | | | |
| GJF544 a | 89.9 | 78.8 | 62.9 | 43.5 | 25.1 | 13.9 | 5.5 |
| GJF544 b | 88.6 | 75.1 | 58.3 | 39.7 | 22.7 | 12.6 | 5.1 |
| GJF854 a | 90.5 | 79.8 | 65.1 | 47.0 | 27.5 | 14.2 | 5.8 |
| GJF854 b | 91.2 | 82.6 | 69.3 | 51.6 | 31.6 | 17.3 | 6.8 |
| GJF855 a | 92.6 | 83.9 | 70.7 | 53.0 | 32.8 | 18.0 | 6.8 |
| GJF855 b | 92.2 | 83.6 | 70.6 | 53.2 | 32.6 | 17.5 | 7.0 |
| B6.4 Dose rate = 25 ppm | | | | | | | |
| GJF646 a | 88.4 | 75.4 | 58.8 | 40.0 | 22.6 | 12.2 | 4.7 |
| GJF646 b | 89.2 | 77.0 | 61.1 | 42.7 | 24.3 | 12.7 | 5.4 |
| GJF856 a | 86.3 | 71.9 | 54.9 | 36.7 | 20.3 | 10.9 | 4.9 |
| GJF856 b | 85.6 | 71.8 | 54.9 | 36.5 | 20.1 | 10.8 | 5.0 |

**TABLE 3C**

| Product | av %+75 micron at dose (ppm) | | | | | % increase of av %+75 from control | | | |
|---|---|---|---|---|---|---|---|---|---|
| | 0 | 0.5 | 1 | 5 | 25 | 0.5 | 1 | 5 | 25 |
| control | 67.4 | | | | | | | | |
| GJF544 | | 72.2 | 74.1 | 76.1 | | 7.1 | 9.9 | 12.9 | |
| GJF854 | | 67.0 | 71.2 | 70.5 | | - | 5.6 | 4.6 | |
| GJF855 | | 67.3 | 67.1 | 67.3 | | - | - | - | |
| GJF646 | | | | | 76.6 | | | | 13.6 |
| GJF856 | | | | | 79.8 | | | | 18.4 |

**TABLE 4A**

| Product | Dose (ppm) | Recovery (g) |
|---|---|---|
| control¹ a | - | 14.85 |
| control¹ b | - | 14.93 |
| control² c | - | 14.93 |
| control² d | - | 15.02 |
| GJF152 a | 1 | 14.90 |
| GJF152 b | 1 | 14.83 |
| GJF152 a | 2 | 14.85 |
| GJF152 b | 2 | 14.81 |
| GJF152 a | 5 | 14.80 |
| GJF152 b | 5 | 14.86 |
| GJF152 a | 10 | 14.85 |
| GJF152 b | 10 | 14.76 |
| GJF152 a | 25 | 13.93 |
| GJF152 b | 25 | 13.95 |
| GJF152 a | 50 | 6.94 |
| GJF152 b | 50 | 6.84 |
| Hamaco 267 | 25 | 14.89 |
| Sta-Lox 600 | 25 | 14.92 |
| Glactacol 411 | 25 | 14.77 |
| Kelzan S | 25 | 14.80 |
| Kelgin HV | 25 | 14.72 |
| Glactacol 817 | 25 | 14.76 |
| Glactacol 640 | 25 | 14.77 |
| Staramic 747 | 25 | 14.81 |
| Klucol HF | 25 | 14.73 |
| Kappa RE9091 | 25 | 14.88 |
| Aquaret | 25 | 14.64 |
| Kelcoloid HVF | 25 | 14.66 |

| | | |
|---|---|---|
| Notes: ¹DI water (1.0 ml) added | | |
| ²17 g/l caustic (1.0 ml) added | | |

**TABLE 4B**

| Product | %-150 | %-125 | %-106 | %-90 | %-75 | %-63 | %-45 |
|---|---|---|---|---|---|---|---|
| control a | 85.6 | 67.9 | 49.8 | 33.1 | 18.2 | 9.2 | 3.4 |
| b | 81.0 | 62.0 | 44.2 | 29.2 | 16.2 | 8.2 | 3.3 |
| c | 83.3 | 65.2 | 47.1 | 30.9 | 17.4 | 9.4 | 3.2 |
| d | 83.5 | 65.7 | 47.0 | 29.7 | 16.6 | 9.8 | 3.0 |
| GJF152¹ a | 78.1 | 58.4 | 39.5 | 23.8 | 13.7 | 9.2 | 2.6 |
| b | 75.1 | 53.3 | 35.0 | 22.1 | 13.3 | 7.9 | 2.7 |
| GJF152² a | 76.6 | 55.1 | 36.2 | 22.0 | 12.8 | 8.2 | 2.3 |
| b | 76.5 | 54.8 | 35.8 | 21.8 | 12.9 | 8.1 | 2.7 |
| GJF152³ a | 78.4 | 56.3 | 36.8 | 22.2 | 12.6 | 7.9 | 2.5 |
| b | 81.7 | 60.4 | 40.7 | 25.3 | 14.2 | 8.5 | 2.8 |
| GJF152⁴ a | 83.8 | 63.2 | 43.0 | 25.9 | 14.2 | 8.8 | 2.8 |
| b | 84.6 | 63.8 | 43.7 | 27.0 | 15.2 | 9.2 | 2.9 |
| GJF152⁵ a | 93.0 | 81.2 | 63.5 | 41.9 | 22.4 | 12.0 | 4.9 |
| b | 91.2 | 79.3 | 62.4 | 41.8 | 22.1 | 11.0 | 5.3 |
| GJF152⁶ a | 99.1 | 97.7 | 94.9 | 90.2 | 82.1 | 72.4 | 52.0 |
| b | 98.8 | 97.2 | 94.4 | 89.8 | 81.4 | 71.2 | 51.0 |
| Hamaco 267 | 87.3 | 70.8 | 53.6 | 37.2 | 22.1 | 12.3 | 4.5 |
| Sta-Lok 600 | 75.6 | 53.8 | 35.1 | 21.6 | 12.2 | 7.0 | 2.5 |
| Glactacol 411 | 89.0 | 71.3 | 51.7 | 32.7 | 16.5 | 7.8 | 3.1 |
| Kelzan S | 84.1 | 65.7 | 46.7 | 29.7 | 16.6 | 9.6 | 3.0 |
| Kelgin HV | 85.3 | 68.7 | 51.0 | 34.0 | 19.0 | 10.0 | 3.5 |
| Glactacol 817 | 84.3 | 66.8 | 48.4 | 31.2 | 17.2 | 9.5 | 3.2 |
| Glactacol 640 | 81.3 | 62.2 | 43.7 | 27.9 | 15.5 | 8.6 | 2.9 |
| Staramic 747 | 85.0 | 66.8 | 48.1 | 31.3 | 17.2 | 9.2 | 3.6 |
| Klucol HF | 83.8 | 64.9 | 45.9 | 29.3 | 16.5 | 9.5 | 3.0 |
| Kappa RE9091 | 93.8 | 85.4 | 72.9 | 56.4 | 36.7 | 21.7 | 9.4 |
| Aquaret | 83.8 | 66.0 | 48.2 | 32.0 | 17.8 | 9.3 | 3.5 |
| Kelcoloid HVF | 82.4 | 64.3 | 46.2 | 29.9 | 16.5 | 8.8 | 3.1 |

| | | | | | | | |
|---|---|---|---|---|---|---|---|
| Notes: ¹Dose rate 1 ppm | | | | | | | |
| ²2 ppm | | | | | | | |
| ³5 ppm | | | | | | | |
| ⁴10 ppm | | | | | | | |
| ⁵25 ppm | | | | | | | |
| ⁶50 ppm | | | | | | | |

**TABLE 4C**

| Product | av %+75 micron at % dose (ppm) | | | | | | | | increase of av %+75 from control | | | | |
|---|---|---|---|---|---|---|---|---|---|---|---|---|---|
| | 50 | 25 | 10 | 5 | 2 | 1 | 0 | 50 | 25 | 10 | 5 | 2 | 1 |
| control | | | | | | | 82.9 | | | | | | |
| GJF152 | 18.3 | 77.8 | 85.3 | 86.6 | 87.2 | 86.5 | | -81.7 | -6.2 | 2.9 | 4.5 | 5.2 | 4.3 |
| Hamaco | | 77.9 | | | | | | | -6.0 | | | | |
| Sta-Lok | | 87.8 | | | | | | | 5.9 | | | | |
| Gl-411 | | 83.5 | | | | | | | <1 | | | | |
| Kelzan | | 83.4 | | | | | | | <1 | | | | |
| Kelgin | | 81.0 | | | | | | | -2.3 | | | | |
| Gl-817 | | 82.8 | | | | | | | <1 | | | | |
| Gl-640 | | 84.5 | | | | | | | 1.9 | | | | |
| Staramic | | 82.8 | | | | | | | <1 | | | | |
| Klucol | | 83.5 | | | | | | | <1 | | | | |
| Kappa | | 63.3 | | | | | | | -23.6 | | | | |
| Aquaret | | 82.2 | | | | | | | <1 | | | | |
| Kelcol | | 83.5 | | | | | | | <1 | | | | |

**TABLE 5A**

| Product | Dose (ppm) | Recovery (g) |
|---|---|---|
| control a | - | 14.65 |
| control b | - | 14.42 |
| control c | - | 14.59 |
| GJF544 a | 5 | 14.35 |
| GJF544 b | 5 | 14.37 |
| GJF544 a | 10 | 13.94 |
| GJF544 b | 10 | 14.15 |
| GJF544 a | 25 | 7.29 |
| GJF544 b | 25 | 7.22 |
| GJF856 a | 5 | 14.62 |
| GJF856 b | 5 | 14.49 |
| GJF856 a | 10 | 14.57 |
| GJF856 b | 10 | 14.69 |
| GJF856 a | 25 | 14.55 |
| GJF856 b | 25 | 14.65 |
| GJF891 a | 5 | 14.51 |
| GJF891 b | 5 | 14.64 |
| GJF891 a | 10 | 14.40 |
| GJF891 b | 10 | 14.57 |
| GJF891 a | 25 | 14.68 |
| GJF891 b | 25 | 14.51 |
| GJF892 a | 5 | 14.68 |
| GJF892 b | 5 | 14.68 |
| GJF892 a | 10 | 14.58 |
| GJF892 b | 10 | 14.58 |
| GJF892 a | 25 | 14.50 |
| GJF892 b | 25 | 14.65 |
| GJF893 a | 5 | 14.48 |
| GJF893 b | 5 | 14.50 |
| GJF893 a | 10 | 14.29 |
| GJF893 b | 10 | 14.47 |
| GJF893 a | 25 | 14.46 |
| GJF893 b | 25 | 14.33 |

**TABLE 5B**

| Product | %-150 | %-125 | %-106 | %-90 | %-75 | %-63 | %-45 |
|---|---|---|---|---|---|---|---|
| control a | 92.5 | 82.6 | 66.8 | 46.3 | 26.4 | 14.5 | 6.5 |
| control b | 92.6 | 83.3 | 67.5 | 46.6 | 27.1 | 15.8 | 6.7 |
| control c | 91.5 | 80.7 | 64.7 | 44.9 | 25.8 | 14.3 | 5.9 |
| B1.1 Dose rate = 25 ppm | | | | | | | |
| GJF856 a | 85.2 | 69.5 | 49.9 | 29.3 | 15.2 | 10.2 | 4.7 |
| GJF856 b | 89.7 | 70.3 | 50.3 | 32.6 | 18.7 | 11.3 | 3.9 |
| | 86.4 | 71.2 | 52.4 | 32.6 | 17.1 | 10.1 | 4.9 |
| GJF891 a | 88.5 | 74.7 | 56.3 | 35.6 | 19.1 | 11.4 | 5.6 |
| GJF891 b | 88.1 | 74.1 | 55.9 | 35.8 | 19.5 | 11.6 | 5.3 |
| GJF892 a | 88.9 | 74.9 | 57.2 | 37.7 | 20.8 | 11.7 | 5.7 |
| GJF892 b | 88.9 | 76.5 | 58.6 | 37.4 | 20.4 | 12.5 | 5.9 |
| GJF893 a | 88.4 | 68.3 | 48.2 | 30.9 | 17.4 | 10.6 | 4.1 |
| GJF893 b | 86.8 | 71.3 | 52.1 | 31.8 | 16.7 | 10.4 | 4.9 |
| B1.2 Dose rate = 10 ppm | | | | | | | |
| GJF544 a | 88.3 | 74.6 | 55.9 | 34.8 | 18.5 | 11.2 | 4.7 |
| GJF544 b | 87.9 | 73.4 | 55.5 | 36.0 | 19.4 | 10.7 | 4.9 |
| GJF856 a | 86.6 | 71.2 | 51.9 | 31.5 | 16.6 | 10.5 | 5.0 |
| GJF856 b | 86.1 | 71.1 | 52.4 | 32.5 | 17.2 | 10.5 | 5.0 |
| GJF891 a | 87.1 | 72.4 | 53.6 | 33.2 | 17.9 | 11.3 | 5.3 |
| GJF891 b | 86.3 | 72.0 | 53.9 | 34.2 | 18.6 | 11.3 | 5.3 |
| GJF892 a | 88.5 | 74.9 | 56.6 | 35.9 | 19.4 | 11.6 | 5.7 |
| GJF892 b | 89.5 | 69.8 | 50.9 | 34.9 | 20.4 | 11.2 | 4.8 |
| GJF893 a | 84.0 | 66.8 | 47.0 | 27.5 | 14.6 | 10.0 | 4.5 |
| GJF893 b | 86.2 | 70.0 | 50.5 | 30.6 | 16.4 | 10.6 | 5.0 |
| B1.3 Dose rate = 5 ppm | | | | | | | |
| GJF544 a | 89.8 | 70.9 | 51.9 | 35.1 | 20.1 | 11.1 | 4.5 |
| GJF544 b | 90.7 | 73.0 | 54.1 | 36.7 | 21.6 | 12.6 | 4.4 |
| GJF856 a | 90.1 | 71.7 | 51.9 | 33.8 | 19.9 | 12.5 | 4.1 |
| GJF856 b | 87.8 | 74.2 | 56.0 | 35.5 | 19.2 | 11.6 | 5.5 |
| GJF891 a | 87.2 | 72.7 | 54.1 | 33.8 | 18.3 | 11.3 | 5.2 |
| GJF891 b | 87.1 | 72.8 | 54.7 | 35.2 | 19.6 | 11.9 | 5.4 |
| GJF892 a | 88.9 | 76.3 | 59.2 | 39.3 | 22.1 | 12.9 | 6.1 |
| GJF892 b | 91.8 | 73.9 | 54.2 | 35.8 | 21.5 | 13.7 | 4.4 |
| GJF893 a | 87.5 | 66.2 | 45.5 | 28.8 | 17.4 | 11.6 | 3.6 |
| GJF893 b | 86.3 | 71.1 | 52.0 | 31.7 | 17.0 | 11.1 | 4.9 |

**TABLE 5C**

| Product | av %+75 micron at dose (ppm) | | | | % increase of av %+75 from control | | |
|---|---|---|---|---|---|---|---|
| | 25 | 10 | 5 | 0 | 25 | 10 | 5 |
| control | | | | 73.6 | | | |
| GJF544 | - | 81.1 | 79.2 | | | 10.2 | 7.6 |
| GJF856 | 83.5 | 83.1 | 80.5 | | 13.5 | 12.9 | 9.4 |
| GJF891 | 80.7 | 81.8 | 81.1 | | 9.6 | 11.1 | 10.2 |
| GJF892 | 79.4 | 80.1 | 78.2 | | 7.9 | 8.8 | 6.3 |
| GJF893 | 83.0 | 84.5 | 82.8 | | 12.8 | 14.8 | 12.5 |

**TABLE 6A**

| Product | Dose (ppm) | Recovery (g) |
|---|---|---|
| control a | - | 14.76 |
| control b | - | 14.80 |
| control c | - | 14.75 |
| GJF812 a | 100 | 14.48 |
| GJF812 b | 100 | 14.65 |
| GJF853 a | 20 | 14.91 |
| GJF853 b | 20 | 14.84 |
| GJF890 a | 20 | 14.61 |
| GJF890 b | 20 | 14.76 |
| GJF661 | 50 | 14.59 |
| GJF661 | 25 | 14.39 |
| GJF661 | 10 | 14.68 |
| GJF662 | 50 | 14.72 |
| GJF662 | 25 | 14.66 |
| GJF662 | 10 | 14.48 |
| GJF544 | 20 | 12.37 |
| GJF871 a | 50 | 14.19 |
| GJF871 b | 50 | 14.33 |

**TABLE 6B**

| Product | %-150 | %-125 | %-106 | %-90 | %-75 | %-63 | %-45 |
|---|---|---|---|---|---|---|---|
| control a | 88.1 | 75.9 | 59.5 | 40.4 | 23.2 | 13.4 | 5.6 |
| | 88.2 | 77.2 | 61.1 | 41.2 | 23.5 | 13.7 | 6.0 |
| control b | 89.3 | 78.6 | 62.5 | 42.4 | 23.8 | 13.5 | 6.2 |
| | 89.5 | 78.3 | 62.3 | 42.8 | 24.4 | 13.6 | 6.0 |
| control c | 90.9 | 79.6 | 63.2 | 43.3 | 25.0 | 14.4 | 6.3 |
| GJF812 a | 86.5 | 71.4 | 52.8 | 33.2 | 18.3 | 11.4 | 4.9 |
| GJF812 b | 89.8 | 70.3 | 50.7 | 33.8 | 19.8 | 11.7 | 4.2 |
| GJF853 a | 91.4 | 81.5 | 66.1 | 46.6 | 27.7 | 16.3 | 7.0 |
| GJF853 b | 91.1 | 80.5 | 65.4 | 46.8 | 27.9 | 15.8 | 7.3 |
| GJF890 a | 90.7 | 79.2 | 62.9 | 43.2 | 24.7 | 13.7 | 5.9 |
| GJF890 b | 90.3 | 78.7 | 62.4 | 42.9 | 24.8 | 14.2 | 6.0 |
| GJF661¹ | 86.8 | 66.7 | 47.2 | 30.9 | 18.1 | 11.0 | 3.9 |
| GJF661² | 87.2 | 69.2 | 50.0 | 32.3 | 19.1 | 12.1 | 3.9 |
| GJF661³ | 88.9 | 76.5 | 58.8 | 38.1 | 21.1 | 12.8 | 5.5 |
| GJF662¹ | 90.4 | 75.1 | 55.6 | 35.1 | 20.4 | 14.1 | 5.2 |
| GJF662² | 88.1 | 74.7 | 57.4 | 38.0 | 21.4 | 12.5 | 5.4 |
| GJF662³ | 90.6 | 79.8 | 63.6 | 43.5 | 25.0 | 14.4 | 5.8 |
| GJF544 | 84.9 | 63.4 | 43.4 | 28.1 | 17.5 | 11.4 | 3.2 |
| GJF871 a | 88.8 | 76.4 | 59.3 | 39.2 | 21.8 | 12.7 | 6.0 |
| GJF871 b | 91.6 | 75.4 | 55.8 | 36.0 | 21.0 | 13.7 | 4.4 |

| | | | | | | | |
|---|---|---|---|---|---|---|---|
| Notes: 1 Dose rate 50 ppm | | | | | | | |
| 2 Dose rate 25 ppm | | | | | | | |
| 3 Dose rate 10 ppm | | | | | | | |

**TABLE 6C**

| Product | av %+75 micron at dose (ppm) | | | | | % increase of av %+75 from control | | | | | |
|---|---|---|---|---|---|---|---|---|---|---|---|
| | 100 | 50 | 25 | 20 | 10 | 0 | 100 | 50 | 25 | 20 | 10 |
| control | | | | | | 75.8 | | | | | |
| GJF812 | 81.0 | | | | | | 6.9 | | | | |
| GJF853 | | | | 72.2 | | | | | | -4.7 | |
| GJF890 | | | | 75.3 | | | | | | - | |
| GJF661 | | 81.9 | 80.9 | | 78.9 | | | 8.0 | 6.7 | | 4.1 |
| GJF662 | | 79.6 | 78.6 | | 75.0 | | | 5.0 | 3.7 | | - |
| GJF544 | | | | 82.5 | | | | | | 8.8 | |
| GJF871 | 78.6 | | | | | | 3.7 | | | | |

## Claims

1. A process for refining aluminous ore for the recovery of alumina which includes the steps of:
(a) digesting the ore in a caustic liquor to extract alumina values;
(b) subsequently clarifying the liquor to remove caustic insoluble materials;
(c) precipitating aluminium hydroxide crystals from the clarified liquor; and
(d) adding to the liquor after the clarification step and prior to the precipitation step an effective amount of a polysaccharide or polysaccharide graft copolymer for agglomeration and/or crystal growth promotion, the effective amount of the polysaccharide or polysaccharide graft copolymer being from about 0.1 ppm to about 100 ppm, based on the total weight of the caustic liquor.

2. A process according to claim 1, wherein the effective amount is from about 0.1 ppm to about 50 ppm, based on the total weight of the caustic liquor.

3. A process according to claim 2, wherein the effective amount is from about 0.1 ppm to about 25 ppm, based on the total weight of the caustic liquor.

4. A process for refining aluminous ore for the recovery of alumina which includes the steps of:
(a) digesting the ore in a caustic liquor to extract alumina values;
(b) subsequently clarifying the liquor to remove caustic insoluble materials;
(c) precipitating aluminium hydroxide crystals from the clarified liquor;
(d) adding to the liquor upstream of the precipitation step an effective amount of a polysaccharide or polysaccharide graft copolymer as an agent for stabilisation of aluminium hydroxide against precipitation at a first concentration and for agglomeration and/or crystal growth promotion at a lower concentration;
(e) controlling the concentration of the agent at or above the first concentration prior to the precipitation step; and
(f) reducing the concentration of the agent to the lower concentration immediately prior to the precipitation step, the lower concentration being from about 0.1 ppm to about 50 ppm, based on the total weight of the caustic liquor.

5. A process according to claim 4, wherein the agent is added to the liquor at a first concentration of from about 50 ppm to about 300 ppm, based on the total weight of the caustic liquor, to stabilize the aluminium hydroxide against precipitation.

6. A process according to claim 4 or 5, wherein the lower concentration is from about 0.1 ppm to about 25 ppm, based on the total weight of the caustic liquor.

7. A process according to any one of claims 1 to 3 or 4 to 6, wherein the polysaccharide or polysaccharide graft copolymer has an average molecular weight of from about 75,000 to about 5,000,000.

8. A method according to any one of claims 1 to 3 or 4 to 7, wherein a polysaccharide is used, selected from the group comprising dextrans having an average molecular weight of from about 75,000 to about 5,000,000, nonionic starch, anionic starch, caragenan, potato starch, wheatstarch, Wades maize cornflour and waxy maize starch.

9. A process according to any one of claims 1 to 3 or 4 to 7, wherein a polysaccharide graft copolymer is used, selected from the group comprising dextran -(g)- polyacrylate and dextran -(g)- polyacrylamide.

## Patentansprüche

1. Verfahren zur Raffination von Aluminiumerz zur Gewinnung von Aluminiumhydroxid, mit den Verfahrensschritten:
(a) digerieren des Erzes in einer alkalischen Flüssigkeit um die aluminiumhydroxidträchtigen Anteile zu extrahieren;
(b) anschließende Klärung der Flüssigkeit, um die alkaliunlöslichen Materialien zu entfernen;
(c) Ausscheidung der Aluminiumhydroxid-Kristalle aus der geklärten Flüssigkeit; und
(d) Hinzufügung zu der Flüssigkeit nach dem Klärüngsschritt und vor dem Ausfällungsschritt einer wirksamen Menge eines Polysaccharids oder eines Polysaccharidpfropfcopolymers zur Förderung der Agglomeration und/oder des Kristallwachstums, wobei die wirksame Menge des Polysaccharids oder des Polysaccharidpfropfcopolymers von ungefähr 0,1 ppm bis ungefähr 100 ppm beträgt, bezogen auf das Gesamtgewicht der alkalischen Flüssigkeit.

2. Verfahren nach Anspruch 1, bei dem die wirksame Menge ungefähr 0,01 ppm bis ungefähr 50 ppm beträgt, bezogen auf das Gesamtgewicht der alkalischen Flüssigkeit.

3. Verfahren nach Anspruch 2, bei dem die wirksame Menge ungefähr 0,1 ppm bis ungefähr 25 ppm beträgt, bezogen auf das Gesamtgewicht der alkalischen Flüssigkeit.

4. Verfahren zur Raffination von Aluminiumerz zur Gewinnung von Aluminiumhydroxid mit den Verfahrensschritten:
(a) digerieren des Erzes in einer alkalischen Flüssigkeit zur Extraktion der aluminiumhydroxidträchtigen Anteile;
(b) anschließende Klärung der Flüssigkeit, um die alkaliunlöslichen Materialien zu entfernen;
(c) Ausfällung der Aluminiumhydroxid-Kristalle aus der geklärten Flüssigkeit;
(d) Hinzufügung zu der Flüssigkeit stromaufwärts des Ausfällungsschrittes eine wirksame Menge eines Polysaccharids oder eines Polysaccharid-Pfropfcopolymers als Mittel zur Stabilisierung des Aluminiumhydroxids gegen Ausfällung bei einer ersten Konzentration und zur Förderung der Agglomeration und/oder des Kristallwachstums bei einer niedrigeren Konzentration;
(e) Steuerung der Konzentration des Mittels auf oder über die erste Konzentration vor dem Ausfällschritt; und
(f) Erniedrigung der Konzentration des Mittels auf die niedrigere Konzentration unmittelbar vor dem Ausfällschritt, wobei die niedrigere Konzentration ungefähr 0,1 ppm bis ungefähr 50 ppm beträgt, bezogen auf das Gesamtgewicht der alkalischen Flüssigkeit.

5. Verfahren nach Anspruch 4, bei dem das Mittel zu der Flüssigkeit bei einer ersten Konzentration von ungefähr 50 ppm bis ungefähr 300 ppm hinzugefügt wird, bezogen auf das Gesamtgewicht der alkalischen Flüssigkeit, um das Aluminiumhydroxid gegen Ausfällung zu stabilisieren.

6. Verfahren nach Anspruch 4 oder 5, bei dem die niedrigere Konzentration von ungefähr 0,1 ppm bis ungefähr 25 ppm beträgt, bezogen auf das Gesamtgewicht der alkalischen Flüssigkeit.

7. Verfahren nach einem der Ansprüche 1 bis 3 oder 4 bis 6, bei dem das Polysaccharid oder das Polysaccharid-Pfropfcopolymer ein mittleres Molekulargewicht von ungefähr 75.000 bis ungefähr 5.000.000 aufweist.

8. Verfahren nach einem der Ansprüche 1 bis 3 oder 4 bis 7, bei welchem ein Polysaccharid verwendet wird, welches aus der Stoffgruppe ausgewählt wird, welche Dextrane mit einem mittleren Molekulargewicht von ungefähr 75.000 bis ungefähr 5.000.000, nichtionische Stärke, anionische Stärke, Caragenan, Kartoffelstärke, Weizenstärke, Wades maize Maismehl und wachshaltige Maisstärke umfaßt.

9. Verfahren nach einem der Ansprüche 1 bis 3 oder 4 bis 7, bei dem ein Polysaccharid-Pfropfcopolymer aus der Stoffgruppe verwendet wird, die Dextran-(g)-Polyacrylat und Dextran-(g)-Polyacrylamid umfaßt.

## Revendications

1. Procédé de raffinage d'un gisement d'alumine pour la récupération d'alumine qui inclut les étapes de :
(a) digestion du minerai dans une liqueur de soude caustique pour extraire la teneur en alumine,
(b) clarification subséquente de la liqueur pour éliminer les matériaux insolubles dans la soude caustique,
(c) précipitation des cristaux d'hydroxyde d'aluminium à partir de la liqueur clarifiée, et
(d) addition à la liqueur après l'étape de clarification et avant l'étape de précipitation d'une quantité efficace d'un polysaccharide ou d'un copolymère de polysaccharide greffé pour l'agglomération et/ou la promotion de la croissance cristalline, la quantité efficace du polysaccharide ou du copolymère de polysaccharide greffé étant d'environ 0.1 ppm à environ 100 ppm, rapporté au poids total de liqueur de soude caustique.

2. Procédé selon la revendication 1, dans lequel la quantité efficace est d'environ 0.1 ppm à environ 50 ppm, rapporté au poids total de la liqueur de soude caustique.

3. Procédé selon la revendication 2, dans lequel la quantité efficace est d'environ 0.1 ppm à environ 25 ppm, rapporté au poids total de la liqueur de soude caustique.

4. Procédé de raffinage de minerai d'alumine pour la récupération d'alumine qui comprend les étapes de :
(a) digestion du minerai dans une liqueur de soude caustique pour extraire la teneur en alumine,
(b) clarification subséquente de la liqueur pour éliminer les matériaux insolubles dans la soude caustique,
(c) précipitation des cristaux d'hydroxyde d'aluminium à partir de la liqueur clarifiée,
(d) addition au courant supérieur de la liqueur de l'étape de précipitation d'une quantité efficace d'un polysaccharide ou d'un copolymère de polysaccharide greffé comme agent de stabilisation d'hydroxyde d'aluminium vis-à-vis de la précipitation à une première concentration et pour l'agglomération et/ou la promotion de la croissance cristalline à une concentration inférieure,
(e) contrôle de la concentration de l'agent à ou au-dessus de la première concentration avant l'étape de précipitation, et
(f) réduction de la concentration de l'agent à une concentration inférieure immédiatement avant l'étape de précipitation, la concentration inférieure étant d'environ 0.1 ppm à environ 50 ppm, rapporté au poids total de la liqueur de soude caustique.

5. Procédé selon la revendication 4, dans lequel l'agent est ajouté à la liqueur à une première concentration allant d'environ 50 ppm à environ 300 ppm, rapporté au poids total de la liqueur de soude caustique, pour stabiliser l'hydroxyde d'aluminium vis-à-vis de la précipitation.

6. Procédé selon les revendications 4 ou 5, dans lequel la concentration inférieure est d'environ 0.1 ppm à environ 25 ppm, rapporté au poids total de la liqueur de soude caustique.

7. Procédé selon l'une quelconque des revendications 1 à 3 ou 4 à 6, dans lequel le polysaccharide ou le copolymère de polysaccharide greffé a un poids moléculaire allant d'environ 75,000 à environ 5,000,000.

8. Méthode selon l'une quelconque des revendications 1 à 3 ou 4 à 7, dans laquelle un polysaccharide est utilisé, choisi parmi le groupe comprenant des dextranes ayant un poids moléculaire allant d'environ 75,000 à environ 5,000,000, de l'amidon non-ionique, de l'amidon ionique, du carraghénane, de l'amidon de pomme de terre, de l'amidon de blé, de la farine de maïs Wades et de la farine de maïs cireux.

9. Procédé selon l'une quelconque des revendications 1 à 3 ou 4 à 7, dans lequel un copolymère de polysaccharide greffé est utilisé et est choisi parmi le groupe comprenant le dextrane-(g)-polyacrylate et le dextrane-(g)-polyacrylamide.
